# EUROPÄISCHE PATENTSCHRIFT

(11) **EP 3 049 316 B1**
(45) Veröffentlichungstag und Bekanntmachung des Hinweises auf die Patenterteilung: **20.06.2018**
(21) Anmeldenummer: 14771517.1
(22) Anmeldetag: 14.08.2014
(51) Int. Cl.: B65G 41/00, B62D 65/18, B65G 17/20

(54) **ÜBERFLURFÖRDEREINRICHTUNG ZUR LAGERUNG AN DER DECKE EINER MONTAGEANLAGE**
OVERHEAD CONVEYING APPARATUS FOR MOUNTING ON THE CEILING OF AN ASSEMBLY PLANT
SYSTÈME DE CONVOYEUR AÉRIEN À MONTER AU PLAFOND D'UNE LIGNE DE MONTAGE

(30) Priorität: 24.09.2013 DE 202013104353 U
(43) Veröffentlichungstag der Anmeldung: 03.08.2016
(73) Patentinhaber: Hösker, Torsten, 74706 Osterburken (DE)
(72) Erfinder: Hösker, Torsten, 74706 Osterburken (DE)
(74) Vertreter: advotec.
(86) Internationale Anmeldenummer: PCT/EP2014/067420
(87) Internationale Veröffentlichungsnummer: WO 2015/043826

(56) Entgegenhaltungen:
- EP-A1- 0 963 904
- WO-A1-01/38162
- WO-A1-03/074348
- WO-A1-2010/038629
- DE-A1- 19 851 437
- DE-U1- 9 416 172
- US-A- 4 936 222

## Beschreibung

Die Erfindung betrifft eine Überflurfördereinrichtung zur Integration in einer Montageanlage, die zum Transport von Fahrzeugkomponenten geeignet ist, nach dem Oberbegriff des Anspruchs 1.

In Montageanlagen zur Herstellung von Fahrzeugen werden verschiedene Arten von Fördereinrichtungen sowie Überflurfördereinrichtungen eingesetzt. Aufgrund der zum jeweils herzustellenden Fahrzeug individuell abgestimmten Montageanlagen und hieran ausgerichteten Fördereinrichtungen werden entsprechend die betrachteten Überflurfördereinrichtungen individuell ausgeführt und hergestellt. Eine Überflurfördereinrichtung der vorliegenden Art betrifft hierbei diejenigen Fördereinrichtungen, die unterhalb der Überflurfördereinrichtung soviel begehbaren und/oder befahrbaren Freiraum lassen, dass eine Person bzw. andere Förderfahrzeuge, beispielsweise Gabelstapler, geeignet fortbewegt werden können. In der Regel wird hierbei eine freie Durchgangshöhe von mindesten 2,5 m oder mehr angestrebt, so dass Gabelstapler oder andere Transportfahrzeuge die Überflurfördereinrichtung unterqueren können. Ebenso werden entsprechende Überflurfördereinrichtungen eingesetzt, um zusätzlichen Montageraum zu gewinnen, wobei unter der Überflurfördereinrichtung auf dem Boden stehend eine weitere Fördereinrichtung oder eine sonstige Montageanlage, beispielsweise ein Montageroboter, angeordnet werden kann. Zur Integration entsprechender Überflurfördereinrichtungen in eine Montageanlage in einem Gebäude ist es im Stand der Technik üblich, ein Traggerüst zur Aufstellung der eigentlichen Fördereinrichtung vor Ort im Gebäude aus Stahlträgern oder dergleichen zusammenzubauen, wobei in aller Regel die Streben und Pfeiler baustellenseitig miteinander verschweißt sind. Dies gestattet die Anpassung an die vorliegenden Verhältnisse sowohl hinsichtlich der Montageanlagen als auch hinsichtlich der Gebäudemöglichkeiten und insbesondere können bereits vorhandene Montageanlagen oder Gebäudeeinbauten Berücksichtigung finden.

Die gattungsgemäße Überflurfördereinrichtung ist zunächst einmal bestimmt zur Integration in eine Montageanlage zum Transport von Fahrzeugkomponenten. Um welche Art von Fahrzeugkomponenten es sich hierbei handelt, ist grundsätzlich ohne Bedeutung. Wesentlich ist, dass die Überflurfördereinrichtung in einem Montagekonzept eingebunden wird und hierbei die Herstellung eines Fahrzeugs durch den Transport der zugewiesenen Fahrzeugteile ermöglicht. Hierzu weist die Überflurfördereinrichtung ein Traggerüst und zumindest eine Fördereinrichtung, beispielsweise einen Schubkettenförderer, auf.

Gattungsgemäß weist das Traggerüst eine Länge von mehr als 5 m und eine Breite von mehr als 2 m auf. In welcher Höhe das Traggerüst der Überflurfördereinrichtung über dem Boden des bestimmungsgemäßen Gebäudes angebracht wird, ist wiederum ohne grundsätzliche Bedeutung, solange eine ausreichend hohe Durchgangshöhe unterhalb des Traggerüsts verbleibt. Die Fördereinrichtung der Überflurfördereinrichtung, beispielweise ein Schubkettenförderer, kann an dem Traggerüst montiert werden und ermöglicht den Transport der entsprechenden Fahrzeugkomponenten, wobei der Transport in aller Regel entlang der Längsrichtung der Überflurfördereinrichtung vonstatten geht.

Weiterhin umfasst das Traggerüst Lagerungsmittel, mit denen die Überflurfördereinrichtung in der Montageanlage gelagert wird. Die Lagerung der Überflurfördereinrichtung muss dabei erhebliche Kräfte aufnehmen und eine sehr hohe Stabilität aufweisen, um die geforderten Toleranzen hinsichtlich der Absetzgenauigkeit der bewegten Fahrzeugkomponenten zu realisieren. Die gattungsgemäße Überflurfördereinrichtung ist dabei dadurch charakterisiert, dass sie nicht auf dem Boden der Montagehalle aufgeständert wird, sondern von der Decke der Montagehalle abgehängt wird. Dies bedeutet also mit anderen Worten, dass das Traggerüst und die Fördereinrichtung von der Decke des Gebäudes abgehängt sind. Dadurch kann ein im Wesentlichen vollständig freier Raum zwischen der Unterseite des Traggerüsts und der Oberseite des Bodens der Montageanlage realisiert werden. Säulen und Portale zur Aufständerung der Überflurfördereinrichtung, die ihrerseits auf dem Boden der Montageanlage stehen, entfallen.

Bei den bekannten Überflurfördereinrichtungen zur hängenden Lagerung an der Decke eines Gebäudes ist es von erheblichem Nachteil, dass die Befestigungspunkte an der Decke in aller Regel nicht frei gewählt werden können, sondern sich nach den baulichen Gegebenheiten des Gebäudes richten. Sind beispielsweise Betonunterzüge zum Tragen des Hallendachs vorhanden, so können diese Betonunterzüge nicht an beliebiger Stelle angebohrt werden, um die Lagerungsmittel zur Befestigung der Überflurfördereinrichtung zu befestigen. Vielmehr stehen dafür regelmäßig nur einzelne Befestigungspunkte an den Betonunterzügen zur Verfügung, beispielsweise an den Stellen, wo die Betonunterzüge ohnehin Ausnehmungen aufweisen. Da also die Befestigungspunkte an der Decke des Gebäudes nicht frei gewählt werden können, stellt es einen erheblichen Aufwand dar, die in ihrer Lage relativ zur Hallendecke weitgehend festgelegten Lagerungsmittel an der darunter zu befestigenden Überflurfördereinrichtung zu fixieren. Um die Fixierung zu realisieren sind deshalb regelmäßig individuell angefertigte Zwischenelemente erforderlich, die zwischen dem Lagerungsmittel an der Decke der Montageanlage einerseits und der Oberseite der Überflurfördereinrichtung andererseits anzubringen sind. Diese jeweils als Einzellösung hergestellten Zwischenelemente weisen dabei den weiteren Nachteil auf, dass sie häufig nicht die notwendige Stabilität aufweisen, um die in der Überflurfördereinrichtung auftretenden dynamischen Kräfte geeignet abzufangen und die geforderte Abgabegenauigkeit der transportierten Fahrzeugkomponenten zu realisieren. Eine Überflurfördereinrichtung gemäß der Präambel von Anspruch 1 ist beispielsweise in der WO 01/38162 offenbart. Um die aus dem Stand der Technik bekannten Nachteile zu vermeiden ist es deshalb Aufgabe der vorliegenden Erfindung, eine neue Überflurfördereinrichtung vorzuschlagen.
Diese Aufgabe wird durch eine Überflurfördereinrichtung nach der Lehre des Anspruchs 1 gelöst.
Vorteilhafte Ausführungsformen der Erfindung sind Gegenstand der Unteransprüche.
Grundgedanke der erfindungsgemäßen Überflurfördereinrichtung ist es, dass zwischen dem an der Decke der Montageanlage befestigten Lagerungsmittel einerseits und dem Tragegerüst andererseits eine Befestigungsebene vorgesehen ist. Die Befestigungsebene ist dabei dadurch charakterisiert, dass sie mit dem Lagerungsmittel einerseits und dem Traggerüst andererseits lastübertragend verbunden ist und aus sich einander kreuzend angeordneten, biegesteifen Stahlträgern gebildet wird. Die Stahlträger der Befestigungsebene sind dabei in den Kreuzungspunkten lastübertragend miteinander verbunden und bilden ein Raster von viereckigen Zwischenfeldern. Durch das Einfügen der zusätzlichen Befestigungsebene aus sich kreuzenden Stahlträgern wird erreicht, dass die darunter angebrachten Bestandteile der Überflurfördereinrichtung standardisierte Übergänge finden, an welchen sie lastübertragend nach obenhin befestigt werden können. Die Befestigung der Befestigungsebene mit den Stahlträgern andererseits erfolgt dann wiederum mit den Lagerungsmitteln an der Decke der Montageanlage, wobei die exakte Lage der einzelnen Befestigungspunkte an der Decke nur noch von untergeordneter Bedeutung ist. Mit anderen Worten bedeutet dies, dass durch das Einfügen der zusätzlichen Befestigungsebene eine Entkopplung der Befestigungspunkte an der Decke der Montageanlage einerseits und der Befestigungspunkten des Traggerüsts andererseits erreicht wird. Dies ermöglicht insbesondere eine Vorfertigung aller Bestandteile der Überflurfördereinrichtung ohne die absolute exakte Kenntnis der Lage von Befestigungspunkten an der Decke der Montageanlage. Bei der Montage der Überflurfördereinrichtung werden dann zunächst die Lagerungsmittel an der Decke der Montageanlage angebracht und danach die Befestigungsebene mit den die Befestigungsebene bildenden Stahlträgern an den Lagerungsmitteln befestigt, beispielsweise angeschweißt. Durch das entsprechend geeignet gewählte Raster der Zwischenebene wird erreicht, dass die Lagerungsmittel problemlos an den Stahlträgern der Befestigungsebene angeschlossen werden können. Sobald dann die Befestigungsebene mit den Stahlträgern an der Decke hängend befestigt ist, kann die Überflurfördereinrichtung mit der Fördereinrichtung und dem Traggerüst darunter in standardisierter Form mit definierten Befestigungspunkten hängend befestigt werden.

Die erfindungsgemäße Überflurfördereinrichtung ermöglicht eine weitgehende Vorfertigung aller Bestandteile der Überflurfördereinrichtung unabhängig von der Bauart der Decke. Die Bauart der Decke kann dann durch entsprechende Lagerungsmittel Berücksichtigung finden, wobei die Lage der einzelnen Lagerungsmittel an der Decke durch die zwischengeschobene Befestigungsebene wiederum flexibel verändert werden kann.

In welcher Weise die Befestigungsebene konstruktiv ausgebildet ist, ist grundsätzlich beliebig. Gemäß einer bevorzugten Ausführungsform ist es vorgesehen, dass die Befestigungsebene zwei Schichten umfasst, wobei die erste Schicht mehrere parallel zueinander in Längsrichtung verlaufende Stahlträger umfasst, und wobei die zweite Schicht mehrere parallel zueinander verlaufende Stahlträger umfasst, wobei die Stahlträger der ersten Ebene in Querrichtung zu den Stahlträgern der zweiten Ebene verlaufen. Insbesondere können die Stahlträger der benachbarten Ebenen im 90° Winkel zueinander verlaufend angeordnet sein, so dass sich ein Raster von rechteckigen Zwischenfeldern bildet.

Gemäß einer weiterhin bevorzugten Ausführungsform ist es vorgesehen, dass die parallel zueinander verlaufenden Stahlträger in der ersten Schicht und/oder in der zweiten Schicht mit einem jeweils äquidistanten Abstand zueinander angeordnet sind. Dadurch kann insbesondere ein Raster von quadratischen Zwischenfeldern gebildet werden.

Die Länge von kommerziell verfügbaren Stahlträgern ist begrenzt. Um dennoch eine Befestigungsebene letztendlich beliebiger Dimensionen bilden zu können, ist es gemäß einer weiteren Ausführungsform vorgesehen, dass die Stahlträger in den beiden Schichten aus mehreren Stahlträgerabschnitten zusammengesetzt sind, wobei die einzelnen Stahlträger in Richtung ihrer Längsachse hintereinander angeordnet werden und im Stoßbereich biegesteif miteinander verbunden sind. Insbesondere können die einzelnen Stahlträger im Stoßbereich miteinander verschweißt werden. Im Ergebnis ergibt sich somit eine außerordentliche steife Befestigungsebene an der die darunter hängenden Bestandteile der Überflurfördereinrichtung mit hoher Stabilität befestigt werden können.

Unabhängig von der Anordnung der einzelnen Stahlträger ist es jedenfalls besonders vorteilhaft, wenn die Stahlträger der beiden Schichten in der Befestigungsebene ein Raster von rechteckigen, insbesondere quadratischen, Zwischenfeldern bilden.

Die Bauart der Verbindung zwischen den Lagerungsmitteln einerseits und den Stahlträgern der Befestigungsebene andererseits ist wiederum grundsätzlich beliebig. Um eine besonders einfach herzustellende und besonders steife Verbindung zu realisieren, ist es gemäß einer bevorzugten Ausführungsform vorgesehen, dass die Lagerungsmittel mit den Stahlträgern der Befestigungsebene verschweißt sind.

Die Bauart der Lagerungsmittel zur Anbindung der Überflurfördereinrichtung an der Decke des Gebäudes der Montageanlage ist grundsätzlich beliebig. Besonders geeignet haben sich Lagerungsmittel erwiesen, die mit einem Querhaupt an der Deckenkonstruktion der Montageanlage eingehängt werden können. Durch das Einhängen der Querhäupter, beispielsweise in Durchbrüche von Betonunterzügen, kann eine sehr hohe Lastaufnahme erreicht werden.

Um die dynamische Stabilität der Überflurfördereinrichtung zu verbessern ist es besonders vorteilhaft, wenn die Lagerungsmittel an der Deckenkonstruktion der Montageanlage reibschlüssig verspannt werden. Durch den Reibschluss kann in einfacher Weise ein absoluter Fixpunkt realisiert werden, der unerwünschte Verschiebungen der Lagerungsmittel relativ zur Decke auch bei höheren Belastungen zuverlässig ausschließt. Zur Aufbringung der notwendigen Kräfte in der reibschlüssigen Verbindung zwischen Lagerungsmittel und Deckenkonstruktion können die Teile des Lagerungsmittels bei der Befestigung an der Deckenkonstruktion nach dem Einhängen des Querhaupts miteinander verschweißt werden. Durch das Schrumpfen der Teile nach dem Verschweißen wird das Querhaupt mit hohen Kräften gegen die Deckenkonstruktion verspannt und somit der gewünschte Reibschluss mit hohem Anpressdruck realisiert.

Im Hinblick auf die Arbeitssicherheit ist es vielfach erforderlich unterhalb der Überflurfördereinrichtung einen Fangschutzboden anzubringen, um insbesondere einen Schutz vor herabfallenden Teilen, beispielsweise Fahrzeugkarosseriekomponenten, zu realisieren. Die erfindungsgemäße Konstruktion erleichtert die Anbringung eines solchen Fangschutzbodens dadurch, dass an den Stahlträgern der Befestigungsebene und/oder an dem Traggerüst entsprechende Befestigungselemente angebracht werden können, beispielsweise durch Schweißverbindungen. Durch den flächigen Fangschutzboden ist dabei einerseits eine hohe Schutzwirkung gewährleistet und zugleich wird die gesamte Anlage durch die zusätzlichen Befestigungselemente zur Befestigung des Fangschutzbodens mechanisch ausgesteift.

Um die Montage der erfindungsgemäßen Überflurfördereinrichtung zu erleichtern, ist es besonders von Vorteil, wenn das Traggerüst selbsttragend ausgeführt ist und vormontiert transportiert werden kann. Auf diese Weise kann das Traggerüst beim Hersteller vormontiert werden. Die vormontierten Teilkomponenten des Traggerüsts können dann zum Verwender transportiert werden, beispielweise durch Transport in Containern. Der Aufbau der Anlage beim Verwender wird durch die vormontierten Bestandteile des Traggerüsts erheblich erleichtert.

Die konstruktive Ausbildung des vormontierten Traggerüsts ist wiederum grundsätzlich beliebig. Um eine ausreichende mechanische Stabilität zu gewährleisten, sollte das Traggerüst zumindest zwei Seitenteile umfassen, die sich parallel zur Längsachse des Traggerüsts erstrecken und in ihrer Bauteilebene eine hohe Steifigkeit aufweisen.

Die Fördereinrichtungen der erfindungsgemäßen Überflurfördereinrichtung, die beispielsweise als Schubkettenförderer ausgebildet sind, können vorteilhafterweise zwischen den Seitenteilen zweier benachbart angeordneter Traggerüste montiert sein.

An gattungsgemäßen Überflurfördereinrichtungen ist es vielfach notwendig einen Wartungsgang vorzusehen, um dem Bedienpersonal Wartungsarbeiten an der Anlage zu ermöglichen. Dies insbesondere deshalb, da die gattungsgemäßen Überflurfördereinrichtungen an der Decke der Montagehalle hängend angeordnet sind und somit nicht in üblicher Weise vom Boden der Montagehalle aus gewartet werden können. Diese Wartungsgänge können an der erfindungsgemäßen Überflurfördereinrichtung bevorzugt im Traggerüst entlang der Längsseite der Fördereinrichtungen realisiert sein.

Um eine hohe mechanische Stabilität bei gleichzeitig relativ geringem Gewicht zu realisieren, ist es besonders vorteilhaft, wenn das Traggerüst in der Art eines räumlichen Fachwerks ausgeführt ist, welches längsgerichtete und quergerichtete und diagonal und aufrecht miteinander verbundene Tragbalkenelemente umfasst. Durch solch eine Fachwerkkonstruktion aus Tragbalkenelementen, beispielweise Stahlprofilen, wird eine sehr hohe Stabilität bei gleichzeitig relativ geringem Gewicht realisiert.

Eine weitere Steigerung der mechanischen Stabilität kann realisiert werden, wenn die Tragbalkenelemente des Traggerüsts einen geschlossenen Rohrquerschnitt aufweisen.

Im Hinblick auf die Herstellungskosten und auf die mechanische Stabilität ist es besonders vorteilhaft, wenn das Traggerüst von einer Schweißkonstruktion gebildet wird.

Eine Ausführungsform der Erfindung ist in den Zeichnungen beispielhaft dargestellt und wird nachfolgend erläutert.

Es zeigen:
- Fig. 1: eine erfindungsgemäße Überflurfördereinrichtung in schematisierter seitlicher Ansicht;
- Fig. 2: die Überflurfördereinrichtung gemäß Fig. 1 in einem vergrößerten Ausschnitt;
- Fig. 3: die Überflurfördereinrichtung gemäß Fig. 1 in Ansicht von oben;
- Fig. 4: die an der Deckenkonstruktion der Montagehalle befestigten Lagerungsmittel der Überflurfördereinrichtung gemäß Fig. 3 in Ansicht von oben;
- Fig. 5: die Befestigungsebene der Überflurfördereinrichtung gemäß Fig. 3 in Ansicht von oben;
- Fig. 6: die Traggerüste und Fördereinrichtungen der Überflurfördereinrichtung gemäß Fig. 3 in Ansicht von oben;
- Fig. 7: die Überflurfördereinrichtung gemäß Fig. 1 in seitlicher Ansicht;
- Fig. 8: ein in der Art eines Fachwerks hergestelltes Modul des Traggerüsts der Überflurfördereinrichtung gemäß Fig. 1 in perspektivischer Ansicht.

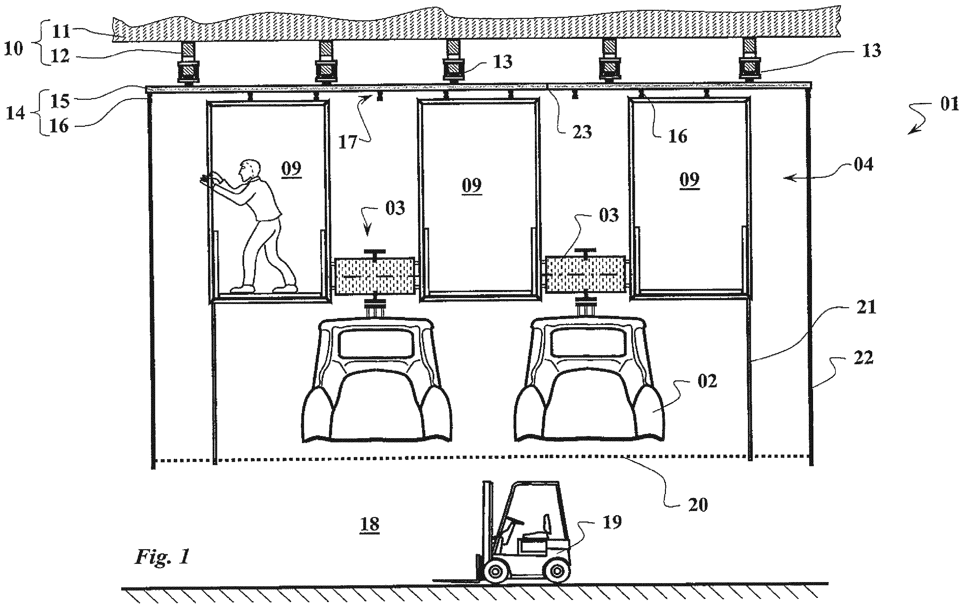

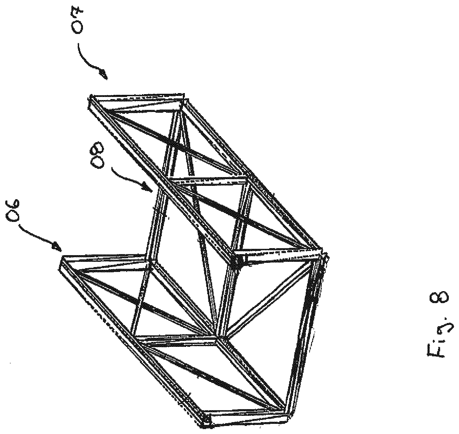

Fig. 1 zeigt eine Überflurfördereinrichtung 01 zur Integration in einer Montageanlage zum Transport von Fahrzeugkomponenten 02, beispielweise Rohkarosserien. Die Fahrzeugkomponenten werden dabei mit Fördereinrichtungen 03, beispielsweise Kettenstauförderern, transportiert. Um eine ausreichende mechanische Stabilität der Überflurfördereinrichtung 01 auch bei dynamischen Belastungen zu gewährleisten und die notwendigen Übergabetoleranzen bei der Übergabe der Fahrzeugkomponenten 02 an nachgeordnete Bestandteile der Montageanlagen, beispielsweise bei der Übergabe an Handhabungsroboter, einhalten zu können, ist die Überflurfördereinrichtung 01 mit Traggerüsten 04 ausgestattet. Jedes Traggerüst 04 besteht dabei aus mehreren Rahmenelementen 05, die in Förderrichtung mit ihrem offenen Querschnitt hintereinander angeordnet sind, und in den Rahmenelementen 05 befestigten Seitenteilen 06, 07 und 08. Die Seitenteile 06, 07 und 08 bilden ein räumliches Fachwerk und werden nachfolgend noch detaillierter erläutert (siehe Beschreibung zu Fig. 8). Die Fördereinrichtungen 03 sind jeweils zwischen den Seitenteilen 06 und 07 benachbarter Traggerüste 04 befestigt.

Jedes Traggerüst 04 bildet einen Wartungsgang 09, in dem sich das Bedienpersonal 10 gefahrlos parallel zu den Fördereinrichtungen 03 bewegen kann. Die gesamte Überflurfördereinrichtung 01 ist zur hängenden Befestigung an einer Deckenkonstruktion 10 vorgesehen. Das eigentliche Dach 11 liegt dabei auf Betonstreben 12 auf. Um die Überflurfördereinrichtung 01 an den Betonstreben 12 befestigen zu können, werden Lagerungsmittel 13 mit ihrem jeweiligen Querhaupt 14 an den Ausnehmungen in den Betonstreben 12 eingehängt und von unten mit einem Unterzug verschweißt. Auf diese Weise wird ein stabiler Reibschluss zwischen dem Lagerungsmittel 13 einerseits und den Betonstreben 12 andererseits realisiert.

Um die Traggerüste 04 in einfacher Weise an den Betonstreben 12 und den daran befestigten Lagerungsmittel 13 fixieren zu können, ist erfindungsgemäß eine Befestigungsebene 14 vorgesehen, die aus sich einander kreuzend angeordneten biegesteifen Stahlträgern 15 und 16 gebildet ist. Die Stahlträger 15 und 16 sind an den Kreuzungspunkten 17 lastübertragend miteinander verbunden, nämlich verschweißt und bilden ein Raster von viereckigen, nämlich rechteckigen, Zwischenfeldern 25.

Durch die hängende Befestigung der Traggerüste 04 und der daran befestigten Fördereinrichtungen 03 wird ein begehbarer und befahrbarer Freiraum 18 unterhalb der Überflurfördereinrichtung 01 gebildet. Im Freiraum 18 können Montageeinrichtungen, beispielsweise Handhabungsroboter, aufgestellt werden oder der Freiraum 18 kann zum Transport von Gütern mittels Fördergeräten, beispielsweise Gabelstaplern 19, genutzt werden. Um einen ausreichenden Unfallschutz vor herabfallenden Teilen zu realisieren, ist oberhalb des Freiraums 18 und unterhalb der Überflurfördereinrichtung 01 ein Fangschutzboden 20 befestigt. Die zur Befestigung des Fangschutzbodens 20 vorgesehenen Stahlstreben 21 und 22 können an den Traggerüsten 04 und der Befestigungsebene 14 angeschweißt werden.

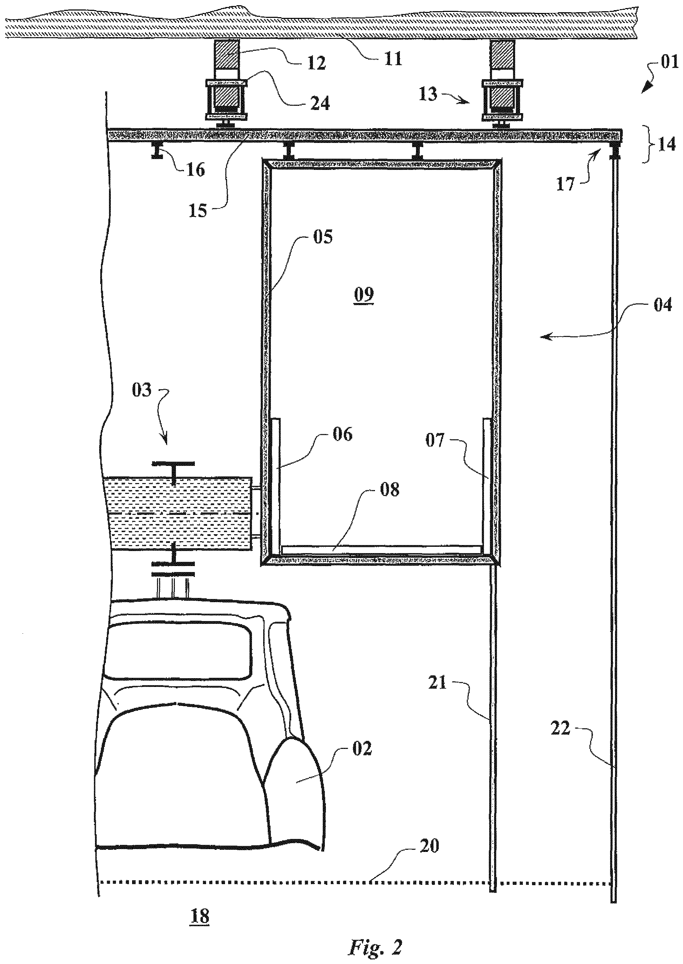

Fig. 2 zeigt die Überflurfördereinrichtung 01 in einem vergrößerten Ausschnitt. Man erkennt die mit den Querhäuptern 14 an den Betonstreben 12 eingehängten Lagerungsmittel 13.

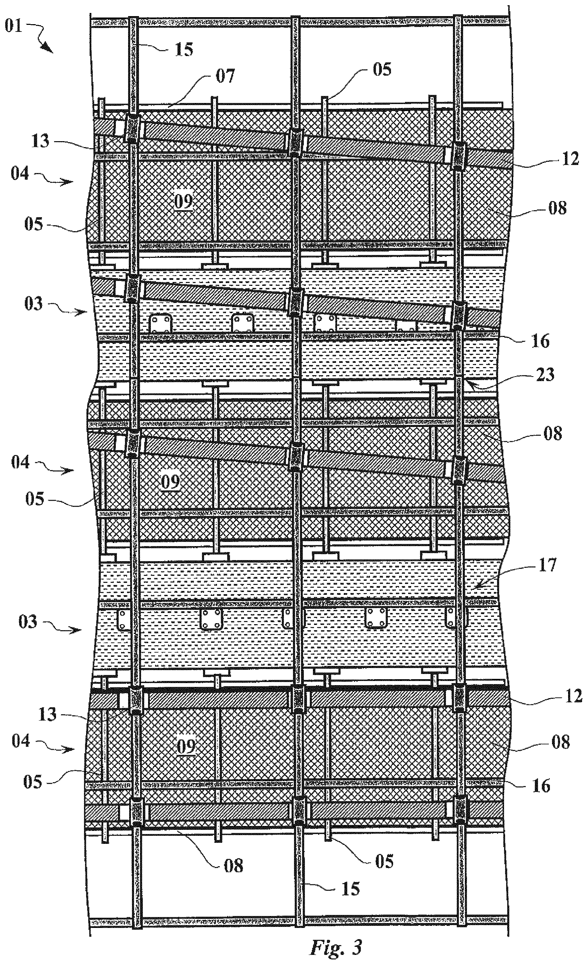

Fig. 3 zeigt die Überflurfördereinrichtung 01 in Ansicht von oben, wobei das Dach 11 in Fig. 3 nicht dargestellt ist. Die Betonstreben 12 verlaufen teilweise nicht parallel zueinander und in unterschiedlichem Abstand. Um trotzdem die Überflurfördereinrichtung 01 in einfacher Weise an der Decke 10 befestigen zu können, ist die Befestigungsebene 14, bestehend aus den Stahlträgern 15 und 16, zwischen den Betonstreben 12 und den daran befestigten Lagerungsmitteln 13 einerseits und den Traggerüsten 04 andererseits eingeschoben. Dadurch gelingt es die Lage der Lagerungsmittel 13 relativ zur Lage der Traggerüste 04 entkoppelt voneinander anordnen zu können. Man erkennt, dass die Stahlträger 15 und 16 der Befestigungsebene 14 ein Raster von rechteckigen Zwischenfeldern 25 bilden, wobei dieses Raster durch seine Vielzahl von Kreuzungspunkten in einfacher Weise an den Betonstreben 12 einerseits und den Traggerüsten 04 andererseits befestigt werden kann.

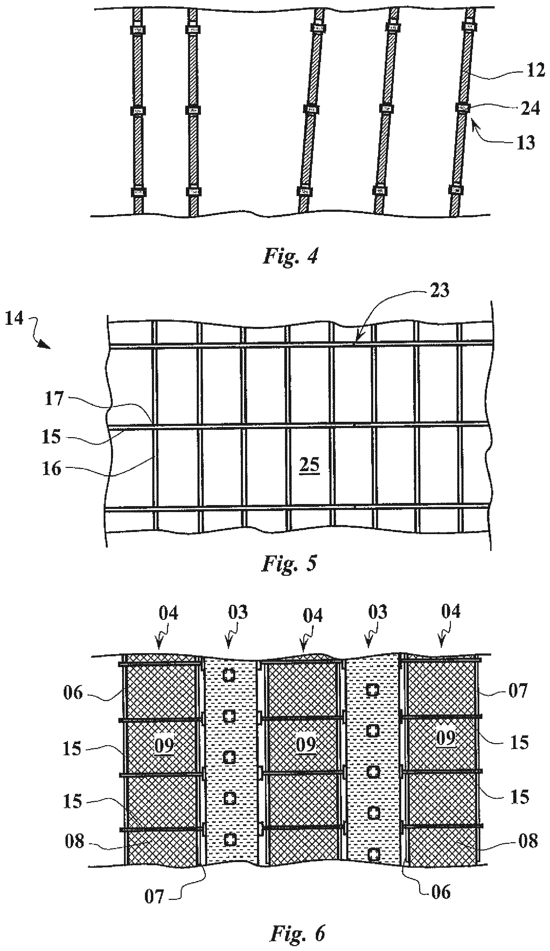

Fig. 4, Fig. 5 und Fig. 6 zeigen die verschiedenen Bestandteile der Überflurfördereinrichtung 01 in abgeschichteter Form jeweils in Ansicht von oben. Fig. 4 zeigt die Betonstreben 12 mit den daran befestigten Lagerungsmitteln 13. Unter den Lagerungsmitteln 13 ist die aus den Stahlträgern 15 und 16 gebildete Befestigungsebene 14 aufgehängt. Fig. 5 zeigt die Stahlträger 15 und 16. In Stoßbereichen 23 sind Stahlträgerabschnitte miteinander verschweißt, um letztendlich somit Stahlträger 15 und 16 in der notwendigen Länge zu bilden. Fig. 6 zeigt die Traggerüste 04 mit den beiden dazwischen angeordneten Fördereinrichtungen 03, die an der Befestigungsebene 14 aufgehängt werden.

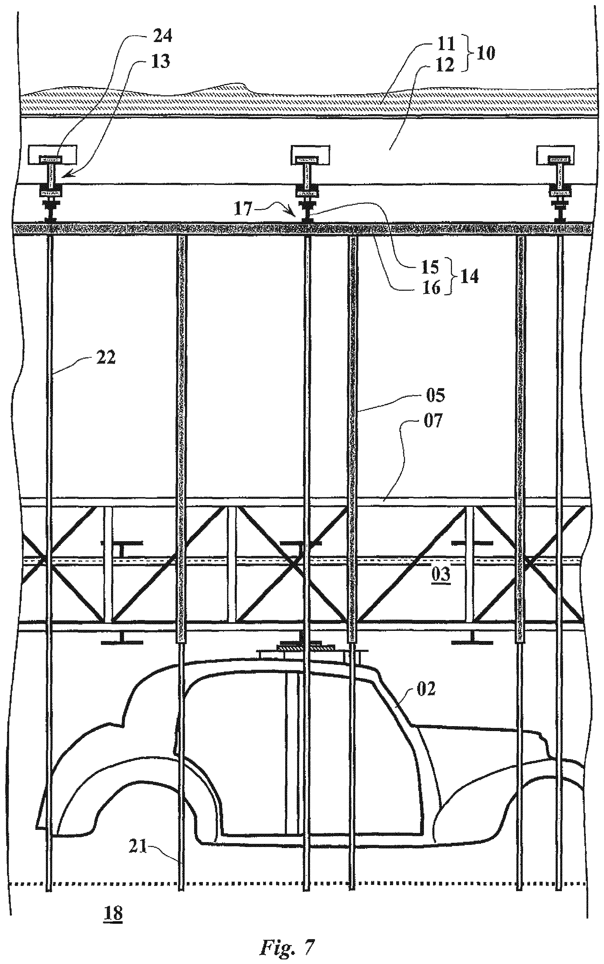

Fig. 7 zeigt die Überflurfördereinrichtung 01 in seitlicher Ansicht. Man erkennt die hintereinander angeordneten Rahmen 05 der Traggerüste 04, die jeweils an der Unterseite der Stahlträger 16 befestigt sind. In den Rahmen 05 sind die Seitenteile 06, 07und 08, die in der Art von Fachwerkkonstruktionen ausgebildet sind, gehalten, wobei zwischen den Rahmen 05 und den Seitenteilen 06, 07 und 08 jeweils Schweißverbindungen vorhanden sind, um die Überflurfördereinrichtung 01 auszusteifen.

Fig. 8 zeigt die Seitenteile 06, 07 und 08 in perspektivischer Ansicht. Die Seitenteile 06, 07 und 08 können als vorgefertigte Module, wie in Fig. 8 dargestellt, transportiert und eingebaut werden.

## Patentansprüche

1. Überflurfördereinrichtung (01) zur Integration in einer Montageanlage zum Transport von Fahrzeugkomponenten (02) mittels einer auf der Überflurfördereinrichtung (01) angeordneten Fördereinrichtung (03), mit zumindest einem Traggerüst (04), wobei das Traggerüst (04) eine Länge von mehr als 5 m und eine Breite von mehr als 2 m aufweist, und wobei die Fördereinrichtung (03) am Traggerüst (04) montierbar ist, und wobei das Traggerüst (04) und die Fördereinrichtung (03) eine steife Förderschicht bilden, in oder an der die Fahrzeugkomponenten (02) von einer Eingabestelle zu einer Ausgabestelle transportiert werden können, und wobei die Überflurfördereinrichtung (01) mit Lagerungsmitteln (13) an der Deckenkonstruktion (10) der Montageanlage hängend gelagert ist, und wobei durch die hängende Lagerung der Überflurfördereinrichtung (01) an der Deckenkonstruktion (10) der Montageanlage zwischen der Unterseite des Traggerüsts (04) und der Oberseite des Bodens der Montageanlage ein zur Bauteilmontage und/oder zum Bauteiltransport geeigneter, begehbarer und/oder befahrbarer Freiraum (18) gebildet wird,
**dadurch gekennzeichnet,**
**dass** zwischen den an der Deckenkonstruktion (10) der Montageanlage befestigten Lagerungsmitteln (13) einerseits und dem Traggerüst (04) anderseits eine Befestigungsebene (14) vorgesehen ist, wobei die Befestigungsebene (14) lastübertragend mit den Lagerungsmitteln (13) einerseits und dem Traggerüst (04) anderseits verbunden ist, und wobei die Befestigungsebene (14) aus sich einander kreuzend angeordneten, biegesteifen Stahlträgern (15, 16) gebildet ist, wobei die Stahlträger (15, 16) in den Kreuzungspunkten (17) lastübertragend miteinander verbunden sind, und wobei die sich kreuzend angeordneten Stahlträger (15, 16) ein Raster von viereckigen Zwischenfeldern (25) bilden.

2. Überflurfördereinrichtung nach Anspruch 1,
**dadurch gekennzeichnet,**
**dass** die Befestigungsebene (14) zwei Schichten umfasst, wobei die erste Schicht mehrere parallel zueinander in Längsrichtung verlaufende Stahlträger (15) umfasst, und wobei die zweite Schicht mehrere parallel zueinander in Querrichtung verlaufende Stahlträger (16) umfasst.

3. Überflurfördereinrichtung nach Anspruch 2,
**dadurch gekennzeichnet,**
**dass** die jeweils parallel zueinander verlaufenden Stahlträger (15, 16) mit einem jeweils äquidistanten Abstand zueinander angeordnet sind.

4. Überflurfördereinrichtung nach einem der Ansprüche 1 bis 3,
**dadurch gekennzeichnet,**
**dass** die Stahlträger (15, 16) aus mehreren Stahlträgerabschnitten zusammengesetzt sind, die in Richtung der Längsachse hintereinander angeordnet sind und im Stoßbereich (23) biegesteif miteinander verbunden, insbesondere miteinander verschweißt, sind.

5. Überflurfördereinrichtung nach einem der Ansprüche 1 bis 4,
**dadurch gekennzeichnet,**
**dass** die sich kreuzend angeordneten Stahlträger (15, 16) der beiden Schichten in der Befestigungsebene (14) ein Raster von rechteckigen Zwischenfeldern (25) bilden.

6. Überflurfördereinrichtung nach einem der Ansprüche 1 bis 5,
**dadurch gekennzeichnet,**
**dass** die Lagerungsmittel (13) mit den Stahlträgern (15, 16) der Befestigungsebene (14) verschweißt sind.

7. Überflurfördereinrichtung nach einem der Ansprüche 1 bis 6,
**dadurch gekennzeichnet,**
**dass** die Lagerungsmittel (13) jeweils mit einem Querhaupt (14) an der Deckenkonstruktion (10) der der Montageanlage eingehängt sind.

8. Überflurfördereinrichtung nach einem der Ansprüche 1 bis 7,
**dadurch gekennzeichnet,**
**dass** die Lagerungsmittel (13) an der Deckenkonstruktion (10) der Montageanlage reibschlüssig verspannt sind.

9. Überflurfördereinrichtung nach einem der Ansprüche 1 bis 8,
**dadurch gekennzeichnet,**
**dass** an den Stahlträgern (15, 16) der Befestigungsebene (14) und/oder an dem Traggerüst (04) ein Fangschutzboden (20) abgehängt ist, der sich flächig unterhalb der Fördereinrichtung (03) und oberhalb des begehbaren und/oder befahrbaren Freiraums (18) erstreckt.

10. Überflurfördereinrichtung nach einem der Ansprüche 1 bis 9,
**dadurch gekennzeichnet,**
**dass** Teile des Traggerüst (04) selbsttragend ausgeführt sind und vormontiert transportiert werden können.

11. Überflurfördereinrichtung nach Anspruch 10,
**dadurch gekennzeichnet,**
**dass** das Traggerüst (04) zumindest zwei selbsttragend ausgeführte Seitenteile (06, 07, 08) umfasst, die sich parallel zur Längsachse des Traggerüsts (04) erstrecken.

12. Überflurfördereinrichtung nach Anspruch 11,
**dadurch gekennzeichnet,**
**dass** die Fördereinrichtung (03) zwischen den Seitenteilen (06, 07) zweier benachbart angeordneter Traggerüste (04) angeordnet ist.

13. Überflurfördereinrichtung nach einem der Ansprüche 1 bis 12,
**dadurch gekennzeichnet,**
**dass** im Traggerüst (04) entlang der Längsseite der Fördereinrichtung (03) ein Wartungsgang (09) verläuft.

14. Überflurfördereinrichtung nach einem der Ansprüche 1 bis 13,
**dadurch gekennzeichnet,**
**dass** das Traggerüst (04) zumindest teilweise in der Art eines räumlichen Fachwerks ausgeführt ist, welches längsgerichtete und quergerichtete und diagonale und aufrechte miteinander verbundene Tragbalkenelemente umfasst.

15. Überflurfördereinrichtung nach Anspruch 14,
**dadurch gekennzeichnet,**
**dass** die Tragbalkenelemente einen geschlossenen Rohrquerschnitt aufweisen.

16. Überflurfördereinrichtung nach einem der Ansprüche 1 bis 15,
**dadurch gekennzeichnet,**
**dass** das Traggerüst (04) von einer Schweißkonstruktion gebildet wird.

## Claims

1. An overhead conveying device (01) for integration in an assembly plant in order to transport vehicle components (02) by means of a conveying device (03) arranged on the overhead conveying device (01), said overhead conveying device having at least one supporting framework (04), wherein the supporting framework (04) has a length of more than 5 m and a width of more than 2 m, and wherein the conveying device (03) can be mounted at the supporting framework (04), and wherein the supporting framework (04) and the conveying device (03) form a stiff conveying layer, in or at which the vehicle components (02) can be transported from an input point to an output point, and wherein the overhead conveying device (01) is mounted in suspended fashion, with the help of bearing means (13), on the ceiling structure (10) of the assembly plant, and wherein the suspended mounting of the overhead conveying device (01) on the ceiling structure (10) of the assembly plant gives rise to the formation, between the underside of the supporting framework (04) and the upper side of the floor of the assembly plant, of a free space (18), which is suitable for component assembly and/or for component transport purposes and in which it is possible to walk and/or drive,
**characterised in that**
a fastening plane (14) is disposed between, on the one hand, the bearing means (13), which are fastened on the ceiling structure (10) of the assembly plant, and, on the other hand, the supporting framework (04), wherein the fastening plane (14) is connected in a load-transmitting fashion to the bearing means (13), on the one hand, and the supporting framework (04), on the other hand, and wherein the fastening plane (14) is formed from criss-crossing flexurally stiff steel girders (15, 16), wherein the steel girders (15, 16) are connected to one another in a load-transmitting fashion at the points (17) of intersection, and wherein the criss-crossing steel girders (15, 16) form a grid of four-sided intermediate zones (25).

2. The overhead conveying device according to claim 1,
**characterised in that**
the fastening plane (14) comprises two layers, wherein the first layer comprises several steel girders (15) running in a parallel fashion relative to one another in the longitudinal direction, and wherein the second layer comprises several steel girders (16) running in a parallel fashion relative to one another in the transverse direction.

3. The overhead conveying device according to claim 2,
**characterised in that**
the steel girders (15, 16), which in each instance run in a parallel fashion relative to one another, are arranged so as to be equidistant relative to one another in each instance.

4. The overhead conveying device according to any one of the claims 1 to 3,
**characterised in that**
the steel girders (15, 16) are put together from several steel girder portions, which are arranged one behind the other in the direction of the longitudinal axis and have been connected to one another, in particular welded together, in a flexurally stiff fashion in the joint area (23).

5. The overhead conveying device according to any one of the claims 1 to 4,
**characterised in that**
the criss-crossing steel girders (15, 16) of the two layers in the fastening plane (14) form a grid of rectangular intermediate zones (25).

6. The overhead conveying device according to any one of the claims 1 to 5,
**characterised in that**
the bearing means (13) have been welded to the steel girders (15, 16) of the fastening plane (14).

7. The overhead conveying device according to any one of the claims 1 to 6,
**characterised in that**
each of the bearing means (13) has been hooked into the ceiling structure (10) of the assembly plant with a crosshead (14).

8. The overhead conveying device according to any one of the claims 1 to 7,
**characterised in that**
the bearing means (13) are interlocked at the ceiling structure (10) of the assembly plant in a frictional fashion.

9. The overhead conveying device according to any one of the claims 1 to 8,
**characterised in that**
a safety floor (20) is hung from the steel girders (15, 16) of the fastening plane (14) and/or from the supporting framework (04), said safety floor extending in the entire area below the conveying device (03) and above the free space (18), in which it is possible to walk and/or drive.

10. The overhead conveying device according to any one of the claims 1 to 9,
**characterised in that**
parts of the supporting framework (04) are designed so as to be self-supporting and can be transported in preassembled form.

11. The overhead conveying device according to claim 10,
**characterised in that**
the supporting framework (04) comprises at least two side parts (06, 07, 08) which are designed so as to be self-supporting, and which extend in a parallel fashion relative to the longitudinal axis of the supporting framework (04).

12. The overhead conveying device according to claim 11,
**characterised in that**
the conveying device (03) is arranged between the side parts (06, 07) of two adjacent supporting frameworks (04).

13. The overhead conveying device according to any one of the claims 1 to 12,
**characterised in that**
a maintenance walkway (09) runs in the supporting framework (04), along the longitudinal side of the conveying device (03).

14. The overhead conveying device according to any one of the claims 1 to 13,
**characterised in that**
the supporting framework (04) is designed, at least partially, in the manner of a spatial truss and comprises longitudinally and transversely oriented and diagonal and upright interconnected supporting beam elements.

15. The overhead conveying device according to claim 14,
**characterised in that**
the supporting beam elements have a closed tubular cross-section.

16. The overhead conveying device according to any one of the claims 1 to 15,
**characterised in that**
the supporting framework (04) is formed by a welded structure.

## Revendications

1. Dispositif (01) de convoyeur aérien pour être intégré dans une usine d'assemblage pour transporter des composants (02) de véhicule au moyen d'un dispositif (03) de convoyeur qui est disposé sur le dispositif (01) de convoyeur aérien, ledit dispositif de convoyeur aérien comprenant au moins un cadre (04) de support, le cadre (04) de support ayant une longueur de plus de 5 m et une largeur de plus de 2 m, et le dispositif (03) de convoyeur pouvant être monté sur le cadre (04) de support, et le cadre (04) de support et le dispositif (03) de convoyeur formant une couche de convoyage raide, dans lequel ou sur lequel les composants (02) de véhicule peuvent être transportés d'un point d'entrée vers un point de sortie, et le dispositif (01) de convoyeur aérien étant monté de manière suspendue sur l'ossature (10) du plafond de l'usine d'assemblage par des moyens (13) d'appui, et le montage suspendu du dispositif (01) de convoyeur aérien sur l'ossature (10) du plafond de l'usine d'assemblage occasionnant la formation, entre le côté inférieur du cadre (04) de support et le côté supérieur du fond de l'usine d'assemblage, d'un espace libre (18) qui est approprié pour l'assemblage des composants et/ou pour le transport des composants et qui est accessible à pied et/ou par véhicule,
**caractérisé en ce qu'**
un plan (14) de fixation est prévu entre, d'une part, les moyens (13) d'appui qui sont fixés sur l'ossature (10) du plafond de l'usine d'assemblage, et, d'autre part, le cadre (04) de support, le plan (14) de fixation étant relié, de manière à transmettre des charges, avec les moyens (13) d'appui, d'une part, et le cadre (04) de support, d'autre part, et le plan (14) de fixation étant formé de poutres d'acier (15, 16) disposées en croix et rigides en flexion, les poutres d'acier (15, 16) étant reliées entre elles dans les croisements (17) de manière à transmettre des charges, et les poutres d'acier (15, 16) disposées en croix formant une grille de panneaux intermédiaires (25) quadrangulaires.

2. Dispositif de convoyeur aérien selon la revendication 1,
**caractérisé en ce que**
le plan (14) de fixation comporte deux couches, la première couche comportant plusieurs poutres d'acier (15) passant en parallèle les unes par rapport aux autres dans le sens longitudinal, et la deuxième couche comportant plusieurs poutres d'acier (16) passant en parallèle les unes par rapport aux autres dans le sens transversal.

3. Dispositif de convoyeur aérien selon la revendication 2,
**caractérisé en ce que**
les poutres d'acier (15, 16), qui respectivement passent en parallèle les unes par rapport aux autres, sont disposées les unes par rapport aux autres avec un écart équidistant respectivement.

4. Dispositif de convoyeur aérien selon l'une quelconque des revendications 1 à 3,
**caractérisé en ce que**
les poutres d'acier (15, 16) sont composées de plusieurs sections de poutres d'acier qui sont disposées l'une derrière l'autre dans la direction de l'axe longitudinal et sont reliées entre elles de manière rigide en flexion, en particulier soudées entre elles, dans la zone de jonction (23).

5. Dispositif de convoyeur aérien selon l'une quelconque des revendications 1 à 4,
**caractérisé en ce que**
les poutres d'acier (15, 16) disposées en croix des deux couches forment une grille de panneaux intermédiaires (25) rectangulaires dans le plan (14) de fixation.

6. Dispositif de convoyeur aérien selon l'une quelconque des revendications 1 à 5,
**caractérisé en ce que**
les moyens (13) d'appui sont soudés avec les poutres d'acier (15, 16) du plan (14) de fixation.

7. Dispositif de convoyeur aérien selon l'une quelconque des revendications 1 à 6,
**caractérisé en ce que**
les moyens (13) d'appui sont chacun accrochés à l'ossature du plafond (10) de l'usine d'assemblage avec une traverse (14).

8. Dispositif de convoyeur aérien selon l'une quelconque des revendications 1 à 7,
**caractérisé en ce que**
les moyens (13) d'appui sont haubanés par friction sur l'ossature du plafond (10) de l'usine d'assemblage.

9. Dispositif de convoyeur aérien selon l'une quelconque des revendications 1 à 8,
**caractérisé en ce qu'**
un plancher de sécurité (20) est suspendu aux poutres d'acier (15, 16) du plan (14) de fixation et/ou au cadre (04) de support, ledit plancher de sécurité s'étendant sur toute la surface au-dessous du dispositif (03) de convoyeur aérien et au-dessus de l'espace libre (18) qui est accessible à pied et/ou par véhicule.

10. Dispositif de convoyeur aérien selon l'une quelconque des revendications 1 à 9,
**caractérisé en ce que**
des parties du cadre (04) de support sont réalisées de manière autoportante et peuvent être transportées dans une forme préassemblée.

11. Dispositif de convoyeur aérien selon la revendication 10,
**caractérisé en ce que**
le cadre (04) de support comporte au moins deux pièces latérales (06, 07, 08) réalisées de manière autoportante et s'étendant en parallèle par rapport à l'axe longitudinal du cadre (04) de support.

12. Dispositif de convoyeur aérien selon la revendication 11,
**caractérisé en ce que**
le dispositif (03) de convoyeur est disposé entre les pièces latérales (06, 07) de deux cadres (04) de support adjacents.

13. Dispositif de convoyeur aérien selon l'une quelconque des revendications 1 à 12,
**caractérisé en ce qu'**
un couloir (09) de service passe dans le cadre (04) de support, le long du côté longitudinal du dispositif (03) de convoyeur.

14. Dispositif de convoyeur aérien selon l'une quelconque des revendications 1 à 13,
**caractérisé en ce que**
le cadre (04) de support est réalisé, au moins en partie, à la manière d'un colombage spatial qui comporte des éléments de poutre de support orientés longitudinalement et transversalement et interconnectés diagonalement et verticalement.

15. Dispositif de convoyeur aérien selon la revendication 14,
**caractérisé en ce que**
les éléments de poutre de support présentent une coupe transversale tubulaire fermée.

16. Dispositif de convoyeur aérien selon l'une quelconque des revendications 1 à 15,
**caractérisé en ce que**
le cadre (04) de support est formé par une construction de soudure.
